# EUROPÄISCHE PATENTSCHRIFT

(11) **EP 1 880 925 B1**
(45) Veröffentlichungstag und Bekanntmachung des Hinweises auf die Patenterteilung: **06.05.2009**
(21) Anmeldenummer: 07013055.4
(22) Anmeldetag: 04.07.2007
(51) Int. Cl.: B62D 21/15, B60R 19/26, B60R 19/34

(54) **Kraftfahrzeug mit einer Längs- und Querträger aufweisenden Tragstruktur**
Motor vehicle with a supporting structure comprising longitudinal and transversal beams
Véhicule automobile à structure de support comportant des barres transversales et des longerons

(30) Priorität: 22.07.2006 DE 102006033990
(43) Veröffentlichungstag der Anmeldung: 23.01.2008
(73) Patentinhaber: Dr. Ing. h.c. F. Porsche Aktiengesellschaft, 70435 Stuttgart (DE)
(72) Erfinder: Maya, Andreas, 75387 Neubulach (DE); Hogmüller, Jan, 71229 Leonberg (DE)

(56) Entgegenhaltungen:
- EP-A- 1 593 585
- EP-A2- 0 903 265
- DE-A1-9102004 036 92

## Beschreibung

Die vorliegende Erfindung betrifft ein Kraftfahrzeug mit einer Längs- und Querträger aufweisenden Tragstruktur gemäß dem Oberbegriff des Anspruchs 1. Ein derartiges Kraftfahrzeug ist aus der DE 10 2004 036 929 A1 bekannt.

Um einen möglichst hohen Insassenschutz gewährleisten zu können, sind moderne Kraftfahrzeuge mit sogenannten Knautschzonen ausgestattet, welche im Falle eines Unfalls Aufprallenergie in Deformationsenergie umwandeln und dadurch Aufprallenergie abbauen. Dabei sind prinzipiell zwei unterschiedliche Forderungen miteinander in Einklang zu bringen. Zum einen soll eine Tragstruktur des Kraftfahrzeuges möglichst steif ausgebildet sein und so, die für einen gewissen Fahrkomfort erforderliche Steifigkeit der Karosserie gewährleisten, und zum anderen soll die Tragstruktur jedoch bei einem Unfall in gewisser Weise deformierbar sein und durch eine entsprechende Deformation Aufprallenergie in Verformungsenergie umwandeln können.

Aus der DE 23 57 042 A1 ist eine Vorrichtung zur Energieabsorption, insbesondere für Kraftfahrzeuge, bekannt, die vorzugsweise zwischen einem Stoßfänger und einer Aufbaustruktur vorgesehen ist. Die Vorrichtung wird dabei durch einen Stoßdämpfer und einen plastisch verformbaren Träger gebildet, wobei der Stoßdämpfer in Fahrzeuglängsrichtung zumindest abschnittsweise neben wenigstens einer Wand des Trägers angeordnet ist und über ein oder mehrere Abstützteile mit dem Träger verbunden ist.

Weitere Kraftfahrzeuge mit energieabsorbierenden Aufprallsystemen sind beispielsweise aus der EP 1 106 480 A2 und aus der EP 0 074 705 A1 bekannt.

Die vorliegende Erfindung beschäftigt sich mit dem Problem, für ein Kraftfahrzeug der gattungsgemäßen Art eine verbesserte oder zumindest eine andere Ausführungsform anzugeben, welche einerseits die Steifigkeit einer Tragstruktur verbessert und andererseits ein Crashverhalten positiv beeinflusst.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, bei einem Kraftfahrzeug mit einer Längs- und Querträger aufweisenden Tragstruktur, einen frontseitigen oder einen heckseitigen Querträger fest mit in Fahrzeuglängsrichtung verlaufenden Crashelementen zu verbinden, insbesondere zu verschweißen, und jedes der Crashelemente im zugehörigen, also Hohlprofil ausgebildeten Längsträger an zumindest zwei in Längsträgerlängsrichtung voneinander beabstandeten Stellen abzustützen. Im Vergleich zu einer bisherigen, lediglich an einer einzigen Stelle erfolgten Abstützung, wird dadurch eine deutliche Steigerung der Steifigkeit der Tragstruktur erzielt. Üblicherweise sind dabei zwei rohrartige Crashelemente mit dem front- oder heckseitigen Querträger verbunden und greifen mit ihren, dem Querträger abgewandten Ende, koaxial in einen offenen und dem Crashelement zugewandten Endbereich des zugehörigen Längsträgers ein. Die beiden voneinander in Fahrzeuglängsrichtung beabstandeten Abstützstellen zwischen dem jeweiligen Crashelement und dem zugehörigen Längsträger können dabei beispielsweise an dem, dem Querträger zugewandten Ende des Längsträgers und in einiger Entfernung von da am, dem Längsträger zugewandten Ende des Crashelementes erfolgen. Die zumindest zwei Abstützstellen des Crashelementes im/am Längsträger fixieren das Crashelement koaxial zum Längsträger und erreichen dadurch über die Verbindung mit dem Querträger eine verbesserte Aussteifung der Tragstruktur.

Zweckmäßig ist innerhalb des Längsträgers zumindest ein Schottelement angeordnet, welches vom zugehörigen Crashelement durchdrungen ist und welches eine (zweite) der zumindest zwei in Fahrzeuglängsrichtung voneinander beabstandet angeordneten Abstützstellen bildet. Ein derartiges Schottelement, welches beispielsweise auch mehrteilig ausgebildet sein kann, steift einerseits den Längsträger aus und fixiert andererseits das Crashelement koaxial innerhalb des Längsträgers, wobei denkbar ist, dass das zumindest eine Schottelement fest mit dem Längsträger einerseits und fest mit dem Crashelement andererseits verbunden ist oder aber lediglich einen Schiebesitz für das Crashelement bildet. Bei beiden Ausführungsvarianten kann eine koaxiale Fixierung des Crashelementes im Längsträger erreicht werden, wodurch zusammen mit der festen Anbindung an den front- bzw. heckendseitigen Querträger eine besonders steife Tragstruktur erreicht werden kann.

Zweckmäßig weist ein Blendelement einen in Richtung des rohrförmigen Crashelements vorspringenden Kragen auf, welcher in eine komplementär dazu am Crashelement ausgebildete Einbuchtung eingreift. Durch den Kragen und die dazu komplementär ausgebildete Einbuchtung kann eine vordefinierte Lage des Crashelementes bezüglich des Längsträgers erreicht werden und zugleich eine Fixierung des Crashelementes, sowohl in axialer als auch in radialer Richtung bezüglich des Längsträgers.

Bei einer weiteren vorteilhaften Ausführungsform der erfindungsgemäßen Lösung bilden der Kragen und die dazu komplementär am Crashelement ausgebildete Einbuchtung einen Schiebewiderstand, welche eine Verschiebung des Crashelementes relativ zum Längsträger erst ab einer vordefinierten Kraft erlaubt. Der Kragen und die dazu komplementär ausgebildete Einbuchtung bilden somit einen form- und kraftschlüssigen Verbund, so dass ein Verschieben des Crashelementes relativ zum Längsträger erst ab einer bestimmten Kraft, nämlich erst ab der Kraft, ab der sich entweder das Crashelement oder das Blendelement verformt. Diese Verformung kann im Crashfall ebenfalls zu einem Abbau der Aufprallenergie, das heißt zu einem Überführen in Deformationsenergie genutzt werden. Bis zum Erreichen der vordefinierten Kraft ist eine Relativverschiebung zwischen dem Längsträger und dem Crashelement aufgrund des Materialwiderstandes nicht möglich. Der so aus dem Kragen und der dazu komplementär ausgebildeten Einbuchtung gebildete Schiebewiderstand bestimmt einerseits die exakte Positionierung des Crashelementes bezüglich des Längsträgers und wandelt bei einem Überschreiten der vordefinierten Kraft Aufprallenergie in Deformationsenergie um und hilft dadurch, die Unfallfolgen abzumildern.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine stark vereinfachte Ansicht auf eine vordere Tragstruktur eines Kraftfahrzeuges,
- Fig. 2: eine Schnittdarstellung durch einen Längsträger der Tragstruktur mit einem damit verbundenen Crashelement und einem Querträger.

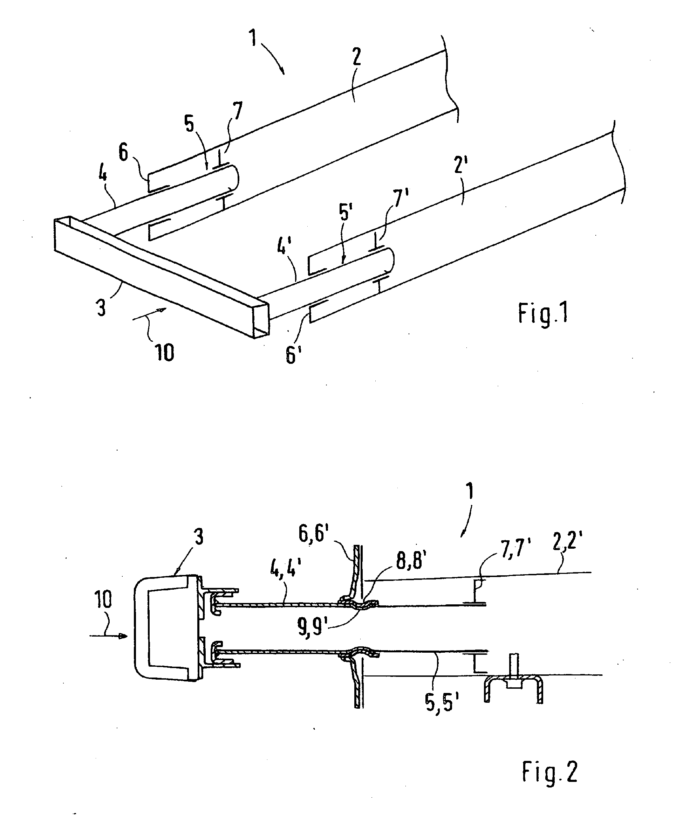

Entsprechend Fig. 1 weist ein frontendseitiger Bereich einer Tragstruktur 1 eines im übrigen nicht dargestellten Kraftfahrzeuges zwei Längsträger 2 und 2' sowie einen Querträger 3 auf. Generell kann dabei der Querträger 3 frontendseitig der Längsträger 2 und 2' oder heckendseitig derselben angeordnet sein. Zwischen dem Querträger 3 und den beiden Längsträgern 2 und 2' sind zwei Crashelemente 4 und 4' angeordnet, welche querträgerseitig fest mit dem Querträger 3 verbunden, insbesondere verschweißt sind. Die Crashelemente 4 und 4' weisen dabei vorzugsweise einen rohrartigen Charakter auf. Mit seinem, dem Querträger 3 abgewandten Ende 5, 5' greift das jeweilige Crashelement 4, 4' koaxial in einen offenen und dem Crashelement 4, 4' zugewandten Endbereich des zugehörigen Längsträgers 2, 2' ein. Die beiden Crashelemente 4 und 4' verlaufen dabei wie die beiden Längsträger 2 und 2' in Fahrzeuglängsrichtung.

Jedes der beiden Crashelemente 4 und 4' ist im/am jeweiligen Längsträger 2, 2' über zumindest zwei in Fahrzeuglängsrichtung voneinander beanstandeten Stellen am jeweiligen Längsträger 2 und 2' abgestützt. Dies erlaubt eine koaxiale Fixierung des jeweiligen Crashelementes 4 bzw. 4' im/am jeweiligen, zugehörigen Längsträger 2, 2'. Dabei ist vorstellbar, dass zusätzlich zu den beiden voneinander beabstandeten Abstützstellen weitere, nicht gezeigte Abstützstellen vorhanden sind, wobei jedoch zumindest zwei Abstützstellen erfindungsgemäß vorgesehen sind.

Eine erste Abstützstelle wird dabei von einem Blendelement 6 bzw. 6' gebildet, welches an einem, dem Querträger 3 zugewandten Ende des Längsträgers 2, 2' angeordnet ist. Das jeweilige Blendelement 6, 6' kann dabei entweder einteilig oder mehrteilig ausgebildet sein. Wie den Fig. 1 und 2 zu entnehmen ist, durchdringt das jeweilige Crashelement 4, 4' das jeweils zugehörige Blendelement 6, 6' und wird von diesem koaxial zum jeweiligen Längsträger 2, 2' fixiert.

Eine zweite Anbindungs- bzw. Abstützstelle wird dabei von einem in Fahrzeuglängsrichtung vom jeweiligen Blendelement 6, 6' innerhalb des Längsträgers 2, 2' angeordneten Schottelementes 7, 7' gebildet, wobei das jeweilige Schottelement 7, 7' vom zugehörigen Crashelement 4, 4' durchdrungen ist und ebenfalls eine koaxiale Fixierung des Crashelementes 4, 4' bezüglich des jeweiligen Längsträgers 2, 2' bildet. Das jeweilige Blendelement 6, 6' und/oder das jeweils zugehörige Schottelement 7, 7' können dabei als Blechformteile ausgebildet sein und über eine geeignete Verbindungsweise, beispielsweise über ein Verkleben oder ein Verschweißen, fest mit dem jeweiligen Längsträger 2, 2' verbunden sein.

Gemäß der Fig. 2 weist das Blendelement 6, 6' einen in Richtung des rohrförmigen Crashelementes 4, 4' vorspringenden Kragen 8, 8' auf, welcher in eine komplementär dazu am Crashelement 4, 4' ausgebildete Einbuchtung 9, 9' formschlüssig und/oder kraftschlüssig eingreift. Diese form/kraftschlüssige Verbindung zwischen dem Kragen 8, 8' und der Einbuchtung 9, 9' bewirkt einen Schiebewiderstand, welcher eine Verschiebung des Crashelementes 4, 4' relativ zum jeweils zugehörigen Längsträger 2, 2' erst ab einem Überschreiten einer vordefinierten Kraft erlaubt. Selbstverständlich ist dabei auch vorstellbar, dass der Kragen 8, 8' am Crashelement 4, 4' und die Einbuchtung 9, 9' am Blendelement 6, 6' ausgebildet sind.

Bei einem Aufprall in Aufprallrichtung 10 muss demnach zunächst ein Überschreiten der vordefinierten Kraft erreicht werden, bei welcher sich der Kragen 8, 8' relativ zur zugehörigen Einbuchtung 9, 9' in Längsrichtung des Trägers 2, 2' verschiebt und dabei beispielsweise entweder ein plastisches Verformen des Crashelementes 4, 4' oder des Kragens 8, 8' bewirkt, wodurch Aufprallenergie in Deformationsenergie umgewandelt werden kann. Bei der in Fig. 2 gezeigten Variante ist die zweite Abstützstelle, also das Schottelement 7, 7' als Schiebesitz ausgebildet, welche einer Verschiebebewegung des Crashelementes 4, 4' relativ zum Längsträger 2, 2' keinen Widerstand entgegensetzt. Selbstverständlich ist hierbei auch denkbar, dass das Schottelement 7, 7' eine ähnliche form-/kraftschlüssige Verbindung mit dem Crashelement 4, 4' eingeht wie die Blende 6, 6'.

Durch die zumindest zwei in Fahrzeuglängsrichtung voneinander beabstandeten Abstützstellen des Crashelementes 4, 4' im/am zugehörigen Längsträger 2, 2' wird eine koaxiale Fixierung des Crashelementes 4, 4' bezüglich des Längsträgers 2, 2' erreicht, wodurch eine besonders hohe Versteifungswirkung in Querrichtung des Crashelementes 4, 4' erzielt werden kann. Zusammen mit dem vorzugsweise torsionssteif ausgebildeten Querträger 3 wird dadurch eine besonders steife Vorderwagen- bzw. Hinterwagenstruktur des Kraftfahrzeuges erreicht, welche sich insbesondere bei Unfällen positiv bewährt.

Zusammenfassend lassen sich die wesentlichen Merkmale der erfindungsgemäßen Lösung wie folgt charakterisieren:

Die Erfindung schlägt vor, bei einem Kraftfahrzeug mit einer Längsträger 2, 2' und Querträger 3 aufweisenden Tragstruktur 1 jeweils zwischen dem Querträger 3 und den Längsträgern 2, 2' angeordnete Crashelemente 4, 4' über zumindest zwei Abstützstellen koaxial zum jeweiligen Längsträger 2, 2' zu fixieren. Hierdurch wird eine besonders in Querrichtung der Crashelemente 4, 4' steife Verbindung zwischen denselben und dem jeweils zugehörigen Längsträger 2, 2' erreicht, was sich insbesondere im Crashfall positiv auswirkt.

## Patentansprüche

1. Kraftfahrzeug mit einem Längsträger (2, 2') und einem Querträger (3) aufweisenden Tragstruktur (1), wobei ein front/heckseitiger Querträger (3) fest mit in Fahrzeuglängsrichtung verlaufenden, rohrartigen Crashelementen (4, 4') verbunden ist und jeweils ein Crashelement (4, 4') mit seinem, dem Querträger abgewandten Ende (5, 5'), koaxial in einen offenen und dem Crashelement (4, 4') zugewandten Endbereich des zugehörigen Längsträgers (2, 2') eingreift und an einem, dem Querträger (3) zugewandten Ende des Längsträgers (2, 2') ein Blendelement (6, 6') angeordnet ist, welches vom zugehörigen Crashelement (4, 4') durchdrungen ist und das Blendelement (6, 6') einen in Richtung des rohrförmigen Crashelements (4, 4') vorspringenden Kragen (8, 8') aufweist, welcher in eine komplementär dazu am Crashelement (4, 4') ausgebildete Einbuchtung (9, 9') eingreift, **dadurch gekennzeichnet, dass** das Crashelement (4, 4') über zwei in Fahrzeuglängsrichtung voneinander beabstandete Abstützstellen am Längsträger (2, 2') abgestützt ist und dass das Blendelement (6, 6') die erste, der zumindest zwei in Fahrzeuglängsrichtung voneinander beabstandet angeordneten Abstützstellen in den Längsträgern (2, 2') bildet und dass innerhalb des Längsträgers (2, 2') zumindest ein Schottelement (7, 7') angeordnet ist, welches von den dem Querträger (3) abgewandten Enden (5, 5') der zugehörigen Crashelemente (4, 4') durchdrungen ist und welche die zweite Abstützstelle im Längsträger (2, 2') bildet.

2. Kraftfahrzeug nach Anspruch 1, **dadurch gekennzeichnet, dass** der Kragen 8, 8') und die dazu komplementäre Einbuchtung (9, 9') einen Schiebwiderstand bilden, welcher eine Verschiebung des Crashelements (4, 4') relativ zum Längsträger (2, 2') erst ab einer vordefinierten Kraft erlaubt.

3. Kraftfahrzeug nach den Ansprüchen 1 oder 2, **dadurch gekennzeichnet, dass** der Querträger (3) torsionssteif ausgebildet ist.

## Claims

1. Motor vehicle with a support structure (1) having a longitudinal member (2, 2') and a crossmember (3), a crossmember (3) at the front/rear end being fixedly connected to tubular crash elements (4, 4') running in the longitudinal direction of the vehicle, and a respective crash element (4, 4') engaging coaxially, by means of its end (5, 5') which faces away from the crossmember, in an open end region of the associated longitudinal member (2, 2'), which end region faces the crash element (4, 4'), and a cover element (6, 6') being arranged at an end of the longitudinal member (2, 2') that faces the crossmember (3), said cover element being penetrated by the associated crash element (4, 4') and the cover element (6, 6') having a collar (8, 8') which projects in the direction of the tubular crash element (4, 4') and engages in an indentation (9, 9') formed in a complimentary manner thereto on the crash element (4, 4'), **characterized in that** the crash element (4, 4') is supported on the longitudinal member (2, 2') via two supporting points spaced apart from each other in the longitudinal direction of the vehicle and **in that** the cover element (6, 6') forms the first of the at least two supporting points in the longitudinal members (2, 2'), arranged at a distance from each other in the longitudinal direction of the vehicle and **in that** at least one bulkhead element (7, 7') is arranged within the longitudinal member (2, 2'), said bulkhead element being penetrated by those ends (5, 5') of the associated crash elements (4, 4') which face away from the crossmember (3) and said bulkhead element forming the second supporting point in the longitudinal member (2, 2').

2. Motor vehicle according to Claim 1, **characterized in that** the collar (8, 8') and the indentation (9, 9') which is complementary thereto form a sliding resistance which permits a displacement of the crash element (4, 4') relative to the longitudinal member (2, 2') only above a predefined force.

3. Motor vehicle according to Claim 1 or 2, **characterized in that** the crossmember (3) is of torsion-proof design.

## Revendications

1. Véhicule automobile à structure de support (1) comportant un longeron (2, 2') et une barre transversale (3), une barre transversale (3) située côté avant/arrière étant reliée fixement à des éléments de collision (4, 4') de type tubulaire s'étendant dans la direction longitudinale du véhicule et un élément de collision (4, 4') s'emboîtant respectivement avec son extrémité (5, 5') opposée à la barre transversale, coaxialement dans une zone d'extrémité, ouverte et orientée vers l'élément de collision, (4, 4') du longeron (2, 2') correspondant et un élément d'écran (6, 6') étant disposé au niveau d'une extrémité du longeron (2, 2') orientée vers la barre transversale (3), ledit élément étant traversé par l'élément de collision (4, 4') correspondant et l'élément d'écran (6, 6') comportant un col (8, 8') saillant en direction de l'élément de collision (4, 4') de forme tubulaire, ledit col s'emboîtant dans un creux (9, 9') formé de façon complémentaire à l'élément de collision (4, 4'), **caractérisé en ce que** l'élément de collision (4, 4') est appuyé contre le longeron (2, 2') par l'intermédiaire de deux zones d'appui écartées l'une par rapport à l'autre dans la direction longitudinale du véhicule et **en ce que** l'élément d'écran (6, 6') forme dans les longerons (2, 2') la première des au moins deux zones d'appui écartées l'une par rapport à l'autre dans la direction longitudinale du véhicule et **en ce qu'**au moins un élément de cloison (7, 7') est disposé à l'intérieur du longeron (2, 2'), ledit élément étant traversé par les extrémités (5, 5') opposées à la barre transversale (3) des éléments de collision (4, 4') correspondant et formant la deuxième zone d'appui dans le longeron (2, 2').

2. Véhicule automobile selon la revendication 1, **caractérisé en ce que** le col (8, 8') et le creux (9, 9') complémentaire forment une résistance glissante permettant un déplacement de l'élément de collision (4, 4') par rapport au longeron (2, 2') seulement après application d'une force prédéfinie.

3. Véhicule automobile selon les revendications 1 ou 2, **caractérisé en ce que** la barre transversale (3) est réalisée de façon à être rigide à la torsion.
